# FASCICULE DE BREVET EUROPEEN

(11) **EP 1 573 362 B1**
(45) Date de publication et mention de la délivrance du brevet: **17.05.2006**
(21) Numéro de dépôt: 03789503.4
(22) Date de dépôt: 25.11.2003
(51) Int. Cl.: G01T 1/17, G01T 1/24

(54) **DISPOSITIFS POUR CORRIGER LE SIGNAL ISSU D'UN DETECTEUR**
VORRICHTUNG ZUR KORREKTUR VON SIGNALEN EINES SENSORS
DEVICE FOR CORRECTING A SIGNAL DERIVED FROM A DETECTOR

(30) Priorité: 16.12.2002 FR 0215908
(43) Date de publication de la demande: 14.09.2005
(73) Titulaire: COMMISSARIAT A L'ENERGIE ATOMIQUE, 75752 Paris Cédex 15 (FR)
(72) Inventeur: OUVRIER-BUFFET, Patrice, F-74410 SAINT-JORIOZ (FR); GLASSER, Francis, F-38320 Eybens (FR); ACCENSI, Marc, F-38430 Moirans (FR)
(74) Mandataire: Quantin, Bruno Marie Henri
(86) Numéro de dépôt international: PCT/FR2003/003488
(87) Numéro de publication internationale: WO 2004/063768

(56) Documents cités:
- FR-A- 2 819 054
- US-A- 5 012 498
- US-A1- 2002 154 729
- US-B1- 6 346 708

## Description

La présente invention concerne l'analyse d'un flux de particules reçu par un détecteur de particules pendant un intervalle donné, notamment dans le but de mesurer l'énergie incidente correspondante.

Les détecteurs considérés dans la présente invention sont des détecteurs connus, qu'ils soient de type unitaire ou matriciel, et quelles que soient les matières, semi-conductrices ou autres, qui les composent. Le document US 2002/0154729 A1 révèle un tel détecteur. Il peut par exemple s'agir d'un détecteur utilisant un matériau CdZnTe, soumis à des rayons X. Les signaux émis par ces détecteurs peuvent être soit des courants électriques, soit d'une nature physique pouvant être convertie de manière connue en courant électrique. On supposera simplement que la réception d'une particule par le détecteur déclenche un signal de sortie ayant la forme d'une impulsion d'une certaine largeur et dont l'amplitude maximale est représentative de l'énergie de cette particule.

De plus, l'invention concerne les systèmes de mesure fonctionnant en intégration, au moyen desquels on mesure l'énergie totale du rayonnement reçu par le détecteur pendant une durée prédéterminée en intégrant sur cette durée le courant issu du détecteur.

L'invention s'applique à tout domaine où l'analyse d'un flux de particules peut être utile, par exemple, dans le cas où ces particules sont des photons, en radiologie, en fluoroscopie ou en imagerie. Elle est particulièrement adaptée aux domaines où l'on recherche un procédé de traitement du signal qui, bien qu'étant de haute qualité (au sens où ledit procédé permet des mesures très exactes du flux), utilise pour ce faire un dispositif peu encombrant ; c'est notamment le cas quand ce dispositif est composé non pas d'un détecteur unique (pixel), mais d'une matrice de pixels, car la taille de l'électronique utilisée est alors limitée par le pas des pixels.

Dans la suite de la description, pour fixer les idées, on parlera de détection de « photons » (c'est à dire de la mesure de caractéristiques d'un rayonnement électromagnétique), mais on se rendra compte que l'invention est totalement indépendante de la nature des particules détectées.

Une cause importante de limitation de la qualité de traitement du signal est le bruit de fond qui est toujours présent dans le courant émis par le détecteur. Ce bruit de fond comprend au moins deux composantes. La première composante est le « courant d'obscurité », c'est-à-dire le courant fluctuant, d'origine thermique, émis par le détecteur, même quand il ne reçoit pas de photons ; la valeur de ce courant dépend de la température du détecteur et de son état de polarisation. La seconde composante est le « courant de traînage », c'est-à-dire le courant fluctuant qui se manifeste pendant un certain temps après la réception d'un photon par le détecteur ; dans les détecteurs utilisant des matières semi-conductrices, le courant de traînage est principalement dû aux défauts cristallins de ces matières.

Examinons les conséquences de ce bruit de fond sur l'exactitude des mesures effectuées au moyen des dispositifs connus fonctionnant en intégration.

Dans ces dispositifs, on intègre directement le courant issu du détecteur, et l'on soustrait ensuite de la charge ainsi calculée une quantité censée représenter l'effet du bruit de fond, afin d'obtenir la valeur représentative de l'énergie incidente proprement dite. Cette façon de procéder classiquement est probablement motivée par le désir de rendre compte de la totalité de l'énergie incidente, y compris les valeurs faibles, d'où l'absence de dispositif de traitement du courant avant l'intégrateur. Mais, comme expliqué ci-dessus, on ne peut attribuer de valeur exacte au bruit de fond, en raison notamment des dérives thermiques, des fluctuations thermiques et du traînage. De ce fait, les mesures d'énergie incidente selon l'art antérieur sont entachées d'erreurs, dont l'importance, en outre, est difficile à estimer.

L'invention a donc pour objet des dispositifs relativement compacts capables de diminuer, dans les mesures de flux de particules, la part due aux dérives et aux fluctuations du bruit de fond présentes dans les signaux issus d'un détecteur, notamment lorsque ce flux de particules est relativement faible.

L'invention concerne ainsi, premièrement, un dispositif de traitement du signal (*i*) issu d'un détecteur de particules, ledit dispositif comprenant un intégrateur destiné à mesurer la charge totale transportée par un signal (*i*₂) alimentant ledit intégrateur pendant un temps prédéterminé. Selon l'invention, ce dispositif comprend en outre un ensemble d'unités destiné à recevoir le signal (*i*) issu dudit détecteur, à réduire le bruit de fond présent dans ce signal (*i*), et à produire ledit signal (*i*₂).

En effet, les auteurs de la présente invention se sont rendus compte que les moyens modernes de détection du signal étaient suffisamment précis et peu bruyants en eux-mêmes pour que l'on puisse envisager de placer des organes de correction du signal *en amont* de l'intégrateur plutôt qu'en aval, sans pour autant perdre une partie significative de l'information contenue dans ce signal ou engendrer de composante parasite significative dans ce signal. On peut alors choisir des organes adéquats pour atténuer, voire supprimer, telle ou telle composante du signal appartenant au bruit de fond.

Selon des caractéristiques particulières de l'invention, l'une desdites unités est destinée à supprimer la composante continue du bruit de fond. Cette composante est essentiellement constituée par le courant d'obscurité, dont la dérive thermique sera supposée être suffisamment lente pour qu'on puisse valablement considérer le courant d'obscurité comme une composante *continue.* Cette unité pourra, par exemple, comprendre un condensateur en série.

Selon d'autres caractéristiques particulières de l'invention, l'une desdites unités est destinée à réduire la composante fluctuante du bruit de fond. Cette composante est essentiellement constituée par les fluctuations du courant d'obscurité et par le courant de traînage.

Selon des caractéristiques encore plus particulières, ladite unité destinée à réduire la composante fluctuante du bruit de fond comprend :
- un convertisseur associant à un courant d'entrée une tension de sortie (*e*), suivi
- d'un déclencheur à seuil laissant passer le courant lorsque ladite tension (*e*) dépasse une première valeur de seuil prédéterminée (ε₁), et empêchant le passage du courant lorsque la tension (*e*) passe en dessous d'une seconde valeur de seuil prédéterminée (ε₂), suivi
- d'un convertisseur associant à une tension d'entrée un courant de sortie.
On suppose ici, pour fixer les idées, que l'impulsion de tension *e(t)* prend des valeurs positives ; le lecteur transposera facilement les caractéristiques de l'invention au cas où l'on observe des valeurs négatives.

Le dispositif selon l'invention s'affranchit ainsi totalement de la charge électrique transportée par le signal entre les impulsions, de sorte que l'effet des fluctuations du bruit de fond n'est ressenti que pendant la courte durée de ces impulsions, au cours desquelles on effectue les mesures. Il en résulte une amélioration sensible de la qualité des mesures par rapport aux dispositifs classiques.

L'invention concerne aussi, deuxièmement, un dispositif de traitement des signaux produits par un ensemble de détecteurs de particules, ledit dispositif étant remarquable en ce qu'au moins l'un de ces signaux est traité au moyen d'un dispositif tel que ceux décrits succinctement ci-dessus.

On notera que les divers dispositifs selon l'invention peuvent facilement être réalisés au moyen de composants à semi-conducteurs miniaturisés classiques, comme on le montrera dans la description détaillée ci-dessous, d'où le faible encombrement de ces dispositifs, ainsi qu'un faible coût de construction.

Enfin, l'invention vise divers appareils d'analyse d'un flux de particules incorporant au moins un dispositif tel que ceux décrits succinctement ci-dessus.

D'autres aspects et avantages de l'invention apparaîtront à la lecture de la description détaillée, que l'on trouvera ci-dessous, de modes particuliers de réalisation donnés à titre d'exemples non limitatifs. Cette description se réfère aux dessins annexés, dans lesquels :
- la figure 1 représente un dispositif classique de traitement du signal issu d'un détecteur de particules, .
- la figure 2 représente un dispositif de traitement du signal issu d'un détecteur de particules selon un mode de réalisation de l'invention,
- la figure 3 représente un mode de réalisation de l'unité de la figure 2 destinée à réduire la composante fluctuante du bruit de fond, et
- la figure 4 montre comment le signal issu de l'intégrateur varie en fonction du temps, quand on utilise l'unité représentée sur la figure 3.

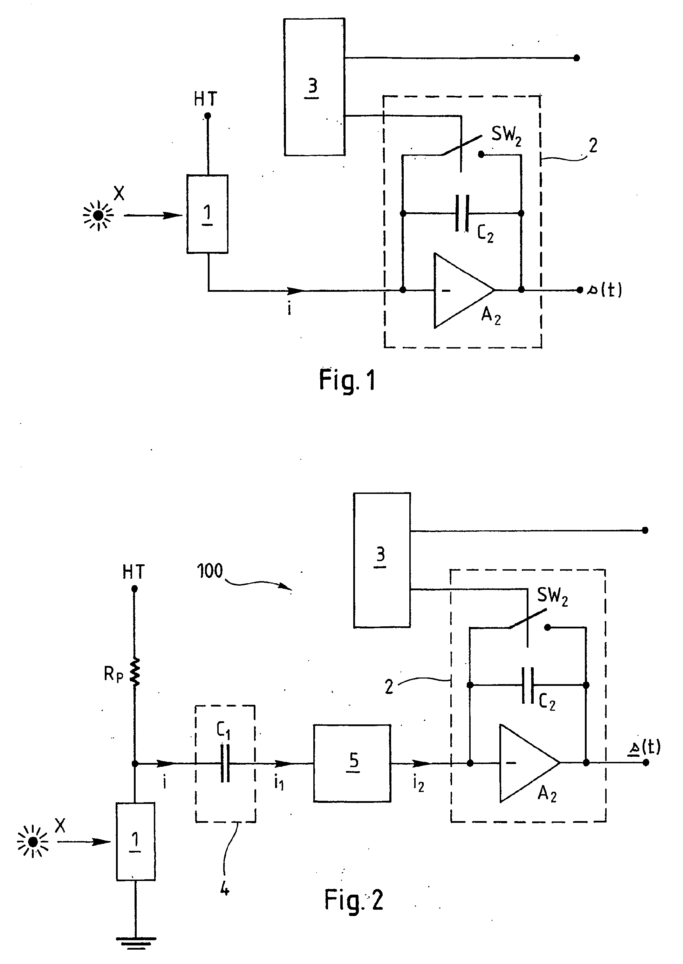

La **figure 1** représente un dispositif classique de traitement du signal issu d'un détecteur de particules 1, qui peut, par exemple, utiliser un matériau CdZnTe, être alimenté par une source à haute tension HT, et servir à la mesure d'un rayonnement X.

Le détecteur 1 émet, en réponse à l'arrivée d'un photon sur sa surface réceptrice, une impulsion de courant *i*. Le courant *i* est traité par un intégrateur 2 pour donner un signal de sortie *s* qui représente la charge électrique totale véhiculée par le courant *i* pendant le temps *t.*

L'intégrateur 2 peut par exemple comprendre un amplificateur A₂ et un condensateur C₂ en parallèle. De plus, un interrupteur SW₂, commandé par une unité logique 3, réinitialise le processus d'intégration à des intervalles prédéterminés T.

La **figure 2** représente, selon un mode de réalisation de l'invention, un dispositif 100 de traitement du signal issu d'un détecteur de particules 1. Le détecteur 1 est semblable à celui de la figure 1. Ce dispositif 100 comprend un intégrateur 2 et une unité logique 3 qui sont eux aussi semblables aux organes correspondants de la figure 1.

Conformément à l'invention, on a inséré entre le détecteur 1 et l'intégrateur 2 des unités 4 et 5 destinées à recevoir le courant *i* issu du détecteur 1, à réduire le bruit de fond présent dans ce courant *i*, et à produire le signal *i*₂ alimentant l'intégrateur 2.

Dans ce mode de réalisation, on a inséré une résistance de polarisation Rₚ entre le détecteur 1 et la source à haute tension HT, afin de stabiliser la tension de sortie du détecteur 1.

Le courant *i* issu du détecteur 1 entre dans une unité 4 destinée à supprimer la composante continue du bruit de fond. Dans ce mode de réalisation, cette unité 4 est simplement constituée par un condensateur C₁.

Le courant *i*₁ sortant de l'unité 4 entre ensuite dans une unité 5 destinée à réduire la composante fluctuante du bruit de fond.

Enfin, le courant *i*₂ sortant de cette unité 5 alimente l'intégrateur 2, dont sort finalement le signal *s*(*t*) « corrigé » selon l'invention.

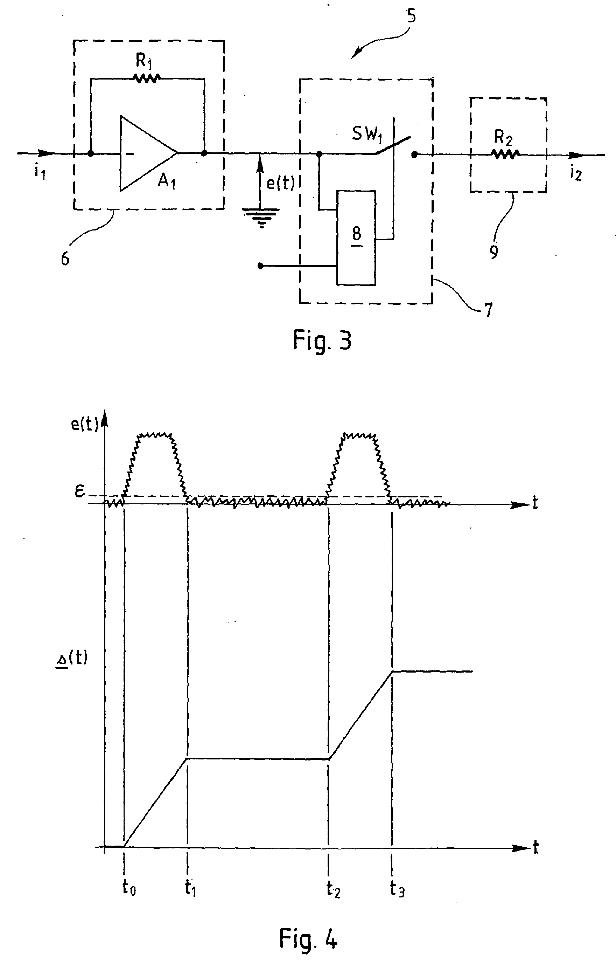

La **figure 3** représente un mode de réalisation de l'unité 5 de la figure 2.

Dans ce mode de réalisation, le signal de courant *i*₁(t) issu de l'unité 4 est converti en un signal de tension *e*(t) dans le convertisseur 6. Dans ce mode de réalisation, le convertisseur 6 est constitué d'un amplificateur A₁ en parallèle avec une résistance R₁.

En variante, on pourra y ajouter un élément supplémentaire en parallèle constitué d'un condensateur (non représenté), ce qui permet de transformer l'amplificateur de courant A₁ en un amplificateur des charges électriques issues du détecteur 1. Il faut alors ajouter, en série avec cet ensemble, un filtre passe-bande (non représenté), ce qui permet de revenir à une tension qui soit l'image du courant issu du détecteur 1. Cette variante de réalisation permet, comme le mode de réalisation indiqué ci-dessus, de réduire la part du bruit de fond dans les mesures, mais avec un meilleur rapport signal sur bruit, en échange d'une configuration légèrement plus complexe.

L'unité 5 comprend ensuite un déclencheur à seuil 7, représenté ici schématiquement sous la forme d'un interrupteur SW₁ commandé par une unité logique 8, et qui pourra par exemple, en pratique, comprendre un comparateur.

Le déclencheur à seuil 7 laisse passer le courant lorsque la tension *e*(*t*) dépasse une première valeur de seuil prédéterminée ε₁, et empêche le passage du courant lorsque la tension *e*(*t*) passe en dessous d'une seconde valeur de seuil prédéterminée ε₂. On ajustera lesdits seuils ε₁ et ε₂ en fonction de l'application envisagée de manière à ce que leur valeur soit suffisamment basse pour laisser passer la plus grande partie du courant lors des impulsions résultant de l'impact d'une particule sur le détecteur, et à ce qu'elle soit suffisamment élevée pour ne pas laisser passer le courant lorsque ce dernier ne contient que les fluctuations du courant d'obscurité et/ou le courant de traînage.

L'unité 5 comprend enfin un convertisseur 9 qui associe au signal de tension à la sortie du déclencheur à seuil 7, un courant *i*₂. Dans ce mode de réalisation, le convertisseur 9 est simplement constitué par une résistance R₂.

La **figure 4** illustre le comportement respectif des signaux e et s en fonction du temps *t*.

La fonction *e(t)* montre une succession d'impulsions au-dessus de la tension de repos (prise ici comme origine), entre *t = t*₀ et *t* = *t*₁*,* puis entre *t = t*₂ et *t* = *t*₃, et ainsi de suite ; ces impulsions sont naturellement la traduction à travers les unités 4 et 6 des impulsions présentes dans le courant *i*. La courbe de la tension *e*(*t*) illustrée en figure 4 montre les irrégularités dues aux fluctuations thermiques et au traînage ; en pratique toutefois, l'amplitude relative de ces irrégularités n'est généralement pas aussi importante que celle représentée ici pour mieux expliquer l'invention.

Dans ce mode de réalisation, on a pris, pour le seuil de déclenchement du déclencheur à seuil 7 : si = ε₂ ≡ s.

La courbe représentant le signal *s*(*t*) sortant du dispositif 100 selon l'invention montre donc l'intégration des charges véhiculées par le courant *i* diminué notamment de la composante continue du bruit de fond.

On observe que ce signal *s*(*t*) reste constant dans les périodes, telles que l'intervalle entre *t* = *t*₁ et *t* = *t*₂, situées entre les impulsions engendrées par l'impact d'un photon sur le détecteur. Ainsi, grâce à l'invention, la charge totale mesurée est complètement débarrassée du bruit de fond agissant au cours des périodes entre les impulsions.

D'autre part, le signal *s*(*t*) présente des parties ascendantes dans les périodes, telles que l'intervalle entre *t = t*₀ et *t* = *t*₁, ou entre *t* = *t*₂ et *t = t*₃, correspondant à l'impact d'un photon sur le détecteur. La charge totale mesurée est débarrassée de la composante continue du bruit de fond agissant au cours des périodes d'impulsions comme elle l'est dans les périodes entre les impulsions. S'il est vrai que le dispositif selon l'invention ne supprime pas la charge électrique due à la composante fluctuante du bruit de fond au cours des périodes d'impulsions, on se rend aisément compte que cette contribution à la charge totale est d'autant plus faible que la durée totale des impulsions est courte par rapport à la durée totale de mesure *T*. L'invention est donc d'autant plus avantageuse que le flux de particules est faible, mais on notera en outre que lorsque le flux de particules considéré est important, la charge totale mesurée est élevée, et la composante fluctuante du courant issu du détecteur est alors de toutes façons négligeable.

La présente invention ne se limite pas aux modes de réalisation décrits ci-dessus : en fait, l'homme de l'art pourra mettre en oeuvre diverses variantes de l'invention tout en restant à l'intérieur de la portée des revendications ci-jointes. Par exemple, on se rendra aisément compte qu'au lieu de placer, entre le détecteur 1 et l'intégrateur 2, l'unité 4 *avant* l'unité 5, on peut également les placer dans l'ordre inverse, moyennant un ajustement adéquat des seuils ε₁ et ε₂.

## Revendications

1. Dispositif (100) de traitement du signal (*i*) issu d'un détecteur de particules (1), ledit dispositif comprenant un intégrateur (2) destiné à mesurer la charge totale transportée par un signal (*i*₂) alimentant ledit intégrateur (2) pendant un temps prédéterminé, **caractérisé en ce qu'**il comprend en outre une unité (5) destinée à réduire la composante fluctuante du bruit de fond présent dans ledit signal (*i*), et à produire ledit signal (*i*₂).

2. Dispositif de traitement du signal selon la revendication 1, **caractérisé en ce que** ladite unité (5) comprend :
- un convertisseur (6) associant à un courant d'entrée une tension de sortie (*e*), suivi
- d'un déclencheur à seuil (7) laissant passer le courant lorsque ladite tension (*e*) dépasse une première valeur de seuil prédéterminée (si), et empêchant le passage du courant lorsque la tension (*e*) passe en dessous d'une seconde valeur de seuil prédéterminée (ε₂), suivi
- d'un convertisseur (9) associant à une tension d'entrée un courant de sortie.

3. Dispositif de traitement du signal selon la revendication 2, **caractérisé en ce que** ledit convertisseur (6) comprend un amplificateur A₁ en parallèle avec une résistance R₁.

4. Dispositif de traitement du signal selon la revendication 2, **caractérisé en ce que** ledit déclencheur à seuil (7) comprend un comparateur.

5. Dispositif de traitement du signal selon la revendication 2, **caractérisé en ce que** ledit convertisseur (9) comprend une résistance R₂.

6. Dispositif de traitement des signaux produits par un ensemble de détecteurs de particules, **caractérisé en ce qu'**au moins l'un de ces signaux est traité au moyen d'un dispositif selon l'une quelconque des revendications 1 à 5.

7. Dispositif de traitement de signaux selon l'une quelconque des revendications 1 à 6, **caractérisé en ce que** lesdites particules sont des photons.

8. Appareil de radiologie, **caractérisé en ce qu'**il comprend au moins un dispositif selon l'une quelconque des revendications 1 à 7.

9. Appareil d'imagerie, **caractérisé en ce qu'**il comprend au moins un dispositif selon l'une quelconque des revendications 1 à 7.

10. Appareil de fluoroscopie, **caractérisé en ce qu'**il comprend au moins un dispositif selon l'une quelconque des revendications 1 à 7.

## Claims

1. Device (100) for processing a signal (i) derived from a particle detector (1), said device comprising an integrator (2) for measuring the total charge transported by a signal (i₂) feeding said integrator (2) for a predetermined time interval, **characterized in that** it further comprises a unit (5) for reducing a fluctuating component of the background noise present in said signal (i) and for producing said signal (i₂).

2. Signal processing device according to claim 1, **characterized in that** said unit (5) comprises:
- a converter (6) for associating with an input current an output voltage (e), followed by
- a threshold trigger (7) for allowing current to pass when said voltage (e) exceeds a first predetermined threshold value (ε₁) and for preventing current from passing when the voltage (e) falls below a second predetermined threshold value (ε₂), followed by
- a converter (9) for associating an input voltage with an output current.

3. Signal processing device according to claim 2, **characterized in that** said converter (6) comprises an amplifier A₁ in parallel with a resistor R₁.

4. Signal processing device according to claim 2, **characterized in that** said threshold trigger (7) comprises a comparator.

5. Signal processing device according to claim 2, **characterized in that** said converter (9) comprises a resistor R₂.

6. Device for processing signals produced by a set of particle detectors, **characterized in that** at least one of these signals is processed by means of a device according to any one of claims 1 to 5.

7. Signal processing device according to any of claims 1 to 6, **characterized in that** said particles are photons.

8. Radiology apparatus **characterized in that** it comprises a device according to any one of claims 1 to 7.

9. Imaging apparatus **characterized in that** it comprises a device according to any one of claims 1 to 7.

10. Fluoroscopy apparatus **characterized in that** it comprises a device according to any one of claims 1 to 7.

## Patentansprüche

1. Vorrichtung (100) für die Bearbeitung des Signals (i), das von einem Teilchendetektor (1) stammt, wobei die Vorrichtung einen Integrator (2) umfasst, der dazu bestimmt ist, die Gesamtladung zu messen, die von einem Signal (i₂) transportiert wird, das den Integrator (2) während einer vorgegebenen Zeit speist, **dadurch gekennzeichnet, dass** sie außerdem eine Einheit (5) umfasst, die dazu bestimmt ist, die Schwankungskomponente des Hintergrundrauschens, das in dem Signal (i) vorhanden ist, zu verringern und das Signal (i₂) zu erzeugen.

2. Signalverarbeitungsvorrichtung nach Anspruch 1, **dadurch gekennzeichnet, dass** die Einheit (5) umfasst:
- einen Umsetzer (6), der einem Eingangsstrom eine Ausgangsspannung (e) zuordnet, gefolgt von
- einem Schwellenauslöser (7), der den Strom durchlässt, wenn die Spannung (e) einen ersten vorgegebenen Schwellenwert (ε₁) übersteigt, und den Stromdurchgang sperrt, wenn die Spannung (e) unter einen zweiten vorgegebenen Schwellenwert (ε₂) absinkt, gefolgt von
- einem Umsetzer (9), der einer Eingangsspannung einen Ausgangsstrom zuordnet.

3. Signalverarbeitungsvorrichtung nach Anspruch 2, **dadurch gekennzeichnet, dass** der Umsetzer (6) einen Verstärker A₁ umfasst, der zu einem ohmschen Widerstand R₁ parallelgeschaltet ist.

4. Signalverarbeitungsvorrichtung nach Anspruch 2, **dadurch gekennzeichnet, dass** der Schwellenauslöser (7) einen Komparator umfasst.

5. Signalverarbeitungsvorrichtung nach Anspruch 2, **dadurch gekennzeichnet, dass** der Umsetzer (9) einen ohmschen Widerstand R₂ umfasst.

6. Vorrichtung für die Verarbeitung von Signalen, die von einer Gesamtheit von Teilchendetektoren erzeugt werden, **dadurch gekennzeichnet, dass** wenigstens eines dieser Signale mittels einer Vorrichtung nach einem der Ansprüche 1 bis 5 verarbeitet wird.

7. Signalverarbeitungsvorrichtung nach einem der Ansprüche 1 bis 6, **dadurch gekennzeichnet, dass** die Teilchen Photonen sind.

8. Radiologievorrichtung, **dadurch gekennzeichnet, dass** sie wenigstens eine Vorrichtung nach einem der Ansprüche 1 bis 7 umfasst.

9. Bildgebungsvorrichtung, **dadurch gekennzeichnet, dass** sie wenigstens eine Vorrichtung nach einem der Ansprüche 1 bis 7 umfasst.

10. Fluoroskopie-Vorrichtung, **dadurch gekennzeichnet, dass** sie wenigstens eine Vorrichtung nach einem der Ansprüche 1 bis 7 umfasst.
